Europäisches Patentamt

European Patent Office

Office européen des brevets

Publication number: **0 284 677**
A1

# EUROPEAN PATENT APPLICATION

(21) Application number: 87302758.5

(51) Int. Cl.⁴: **B01J 29/04**

(22) Date of filing: 31.03.87

(43) Date of publication of application:
05.10.88 Bulletin 88/40

(84) Designated Contracting States:
**BE DE FR GB IT NL SE**

(71) Applicant: **MOBIL OIL CORPORATION**
**150 East 42nd Street**
**New York New York 10017(US)**

(72) Inventor: **Kuehl, Guenter Hinrich**
**1956 Cardinal Lake Drive**
**Cherry Hill New Jersey 08003(US)**

(74) Representative: **Cooper, John Anthony et al**
**Mobil Court 3 Clements Inn**
**London WC2A 2EB(GB)**

(54) **Preparation of catalyst.**

(57) A method is provided for preparing a catalyst composition for processing high nitrogen-containing oils. The method comprises synthesizing a boron-containing crystalline material having the structure of zeolite ZSM-5, ZSM-11, ZSM-12, Beta or Nu-1; drying the crystalline material at a temperature of from ambient to less than 170°C and then calcining the dried crystalline material in an oxygen-and water-free environment of anhydrous ammonia, anhydrous nitrogen, other anhydrous inert gas or a mixture thereof at a temperature of 200° to 600°C. Ammonia is then adsorbed on the calcined crystalline material, whereafter the crystalline material is contacted with an ion-exchange solution at a pH of from above 7 to 11. The ion-exchanged material is then dried at a temperature of from ambient to less than 170°C and subsequently calcined at a temperature of 200° to 600°C.

EP 0 284 677 A1

## PREPARATION OF CATALYST

This invention relates to a method for preparing a catalyst composition comprising a synthetic boron-containing crystalline material having the structure of zeolite ZSM-5, ZSM-11, ZSM-12, Beta or Nu-1.

Zeolite ZSM-5 and its preparation are taught in U.S. Patent Nos. 3,702,886 and Re. 29,948. Zeolites ZSM-11, ZSM-12, Beta and Nu-1 and their preparation are taught in U. S. Patent Nos. 3,709,979; 3,832,449; 3,308,069; Re. 28,341; and 4,060,590, respectively. A boron-containing crystalline material having the structure of zeolite ZSM-5 is disclosed in U. S. Patent Nos. 4,268,420 and 4,269,813 but the methods of synthesis taught in these patents allow for substantial removal of boron from the crystal structure by way of hydrolysis when a catalyst comprising same is formulated.

According to the present invention there is provided a catalyst composition comprising a boron-containing crystalline material having the structure of zeolite ZSM-5, ZSM-11, ZSM-12, Beta or Nu-1, which comprises the sequential steps of synthesizing a boron-containing crystalline material having the structure of zeolite ZSM-5, ZSM-11, ZSM-12, Beta or Nu-1; drying said crystalline material at a temperature of from ambient to less than 170°C; calcining said dried crystalline material in an oxygen-and water-free environment of anhydrous ammonia, anhydrous nitrogen, other anhydrous inert gas or a mixture thereof at a temperature of 200° to 600°C; adsorbing ammonia on said calcined crystalline material; contacting said crystalline material with an ion-exchange solution at a pH from above 7 to 11; drying said ion-exchanged material at a temperature of ambient to less than 170°C and calcining said dried ion-exchanged material at a temperature of 200° to 600°C.

The first step of the critical sequence of steps of the present method involves synthesis of a boron-containing crystalline material having the structure of zeolite ZSM-5, ZSM-11, ZSM-12, Beta or Nu-1. The synthesis is preferably conducted in known manner from a reaction mixture containing sources of an organic nitrogen-containing cation, such as, depending on the zeolite structure to be produced, a primary amine containing from 2 to 10 carbon atoms, or an ammonium compound, such as a tetraalkylammonium compound, in which the alkyl group contain from 2 to 5 carbon atoms, sodium oxide, an oxide of silicon, water and a source of boron and, optionally, an oxide of aluminum, and having a composition, in terms of mole ratios of oxides, falling within the following ranges:

|  | Broad | Preferred | Most Preferred |
|---|---|---|---|
| $OH^-/SiO_2$ | 0.07-1.0 | 0.1-0.8 | 0.2-0.75 |
| $R_4N^+/(R_4N^+ + Na^+)$ | 0.2 -0.95 | 0.3-0.9 | 0.4-0.9 |
| $H_2O/OH^-$ | 10-300 | 10- 300 | 10 -300 |
| $SiO_2/Al_2O_3$ | 500-Infinity | 750-30,000 | 1,000-10,000 |
| $SiO_2/B_2O_3$ | 4-300 | 6-200 | 8-100 |

wherein R is an organic moiety in the nitrogen-containing cation. Synthesis conditions will generally include heating the foregoing reaction mixture to a temperature of from 90° to 200°C for a period of time of from 6 hours to 120 days. A more preferred temperature range is from 100° to about 200°C, with the preferred time at a temperature in such range being from 12 hours to 10 days.

The digestion of the gel particles is carried out until crystals form. The crystalline product is then separated from the reaction medium, such as by cooling the whole to room temperature, filtering and water-washing at conditions including elevated pH, e.g., with 0.01 N NaOH or 0.01N $Na_2CO_3$ solution, so as to ensure limited, if any, removal of boron from the crystalline structure.

The second step of the present method involves drying the crystalline material at a temperature of from ambient to less than 170°C, usually from 65° to less than 170°C, for a time of from 8 to 24 hours and at a pressure, preferably atmospheric, sufficient to substantially remove any water present. The anhydrous composition of the boron-containing crystalline material having the noted zeolite structures in the "as crystallized" form can be identified, in terms of mole ratios of oxides, as follows:

$(R'_2O. M \frac{O}{2})_n$ W : $(Al_2O_3)_x$ :$(B_2O_3)_z$ : $(SiO_2)_y$

wherein W (X + Z) is from greater than 0.5 to less than 3; Y (X + Z) is greater than about 20; Z (X + Z) is from 0.6 to 1.0; R' is the nitrogen-containing cation; M is a metal from Group IA of the Periodic Table of the Elements, ammonium, hyrogen or mixtures thereof; and n is the valence of M.

The third step of the present method involves calcining the dried boron-containing crystalline material from the first step in an oxygen-and water-free environment of an anhydrous gas inert to the crystalline material, such as anhydrous nitrogen anhydrous ammonia, or a mixture thereof, at a temperature of 200° to 600°C and preferably for a time of from about 10 minutes to about 48 hours. The absence of oxygen prevents spontaneous combustion of the organic cation and the associated instantaneous temperature excursion, which would cause formation of water by dehydroxylation of the hydrogen form and loss of boron from the framework. The calcination of this third step is preferably conducted at atmospheric pressure, although subatmospheric or superatmospheric pressures are also useful within the temperature and time limitations above given. It is also preferable to raise the temperature of the crystalline material slowly, ie at 1-10°C/minute, to the desired calcination temperature. After or during cooling, ammonia is adsorbed on the calcined crystalline material so that only the ammonium sodium form rather than the hydrogen sodium form is contacted with aqueous ion-exchange solution.

The fourth step, which must follow the third step, involves contacting the calcined crystalline material with an ion-exchange solution at a controlled pH of from 7 to 11, preferably from 9 to 11. The exchange solution will generally be a 0.01 to 5 Normal, preferably 0.05 to 2 Normal, aqueous solution of a material selected from ammonium salts, ammonium hydroxide, metal salts and mixtures thereof. This step effects replacement of the original alkali metal of the boron-containing crystalline material with metal ions, ammonium ions, hydrogen ions or mixtures thereof. The metal ions include those derived from metals of Group I through VIII of the Periodic Table, such as, for example, Group IB (e.g., Cu and Ag), Group IIA (e.g., Ca), and Group VIII (e.g., Fe, Co, Ni, Ru, Rh, Pd, Ir and Pt). An ammonium-exchange solution is, however, preferred. Following contact with the solution of the desired replacing cations, the crystalline material may be washed with a basic, e.g., pH above 7, solution, such as 1N $NH_4OH$.

An optional fifth step involves compositing the boron-containing crystalline material with an inorganic oxide binder or matrix material. This step may be performed prior to or. after the calcination, ammonia adsorption, and ion-exchange of steps three and four. Suitable binder and matrix materials include active and inactive materials and synthetic or naturally occurring zeolites. as well as materials such as clays, silica and/or metal oxides. If the final catalyst of the present method is to be used in a process for treating high nitrogen-containing oils, such as, for example, shale oils, the formation of acid sites in or on the binder is desirably avoided, so the binder or matrix material, in that instance, should not be silica-alumina. The materials may be either naturally occurring or. in the form of gelatinous precipitates or gels including mixtures of silica and metal oxides. Inactive materials suitably serve as diluents to control the amount of conversion in a given process so that products can be obtained economically and in orderly manner without employing other means for controlling the rate of reaction.

Naturally occurring clays which can be composited with the boron-containing crystalline material include the montmorillonite and kaolin families which include the sub-bentonites and the kaolins commonly known as Dixie, McNamee, Georgia and Florida clays, or others in which the main mineral constituent is halloysite, kaolinite, dickite, nacrite or anauxite. Such clays can be used in the raw state as originally mined, or they can be initially subjected to calcination, acid treatment or chemical modification.

In addition to the foregoing materials, the boron-containing crystalline material can be composited with a porous material, such as silica, alumina, silica-alumina (with the proviso indicated above for catalyst to be used in processing high nitrogen-containing feedstocks), silica-magnesia, silica-zirconia, silica-thoria, silica-beryllia, silica-titania, as well as ternary compositions, such as silica-alumina-thoria, silica-alumina-zirconia, silica-alumina-magnesia and silica-magnesia-zirconia. The material can be in the form of a cogel. The relative proportions of finely divided boron-containing crystalline material and inorganic oxide may vary widely, with the crystalline material content ranging from about 1 to about 90% by weight and more usually, particularly when the composite is prepared in the form of beads, in the range of 2 to 50% by weight of the composite.

The composite of the fifth step can be shaped into a wide variety of particle sizes. Generally speaking, the particles can be in the form of a powder, a granule, or a molded product, such as an extrudate having particle size sufficient to pass through a 2 mesh (Tyler) screen and be retained on a 400 mesh (Tyler) screen. In cases where the catalyst is molded, such as by extrusion, it can be extruded before drying or dried or partially dried and then extruded.

The sixth step involves drying the composite formed in the fifth step or the exchanged material from the fourth step at a temperature of ambient to less than 170°C, usually from 65° to 150°C, for a period of time of from 8 hours to 24 hours and pressure, preferably atmospheric, sufficient to substantially remove any water component of the composite.

The final step involves calcining the dried material from the sixth step at a temperature of 200° to 600°C for 10 minutes to about 48 hours. This calcination step may be conducted in an atmosphere such as air and at atmospheric pressure, although subatmospheric or superatmospheric pressure are also useful within the temperature and time limitations given.

The resultant catalyst composition is particularly useful for reducing the pour point of oil stocks containing high levels of organic (total) nitrogen, e.g., up to about 3% by weight. The present catalyst exhibits ability to crack normal paraffins shape-selectively in chargestocks containing high basic nitrogen concentrations at low or nil hydrogen consumption. with improved catalyst life due to decreased coking.Reducing the pour point of high nitrogen-containing oil stocks by shape-selective cracking of normal paraffins is quite difficult by conventional catalytic methods due to catalyst poisoning by the basic nitrogen compounds contained therein. The present catalyst material makes it possible to effectively dewax such feedstock. Product quality and pumpability is improved and hydrotreating severity often required in processing such feedstock is decreased when the present catalyst is used. This results in lower overall hydrogen consumption.

The invention will now be more particularly described with reference to the following examples.

## Example 1

Boric acid. 19.2 grams, and 28.8 grams of sodium hydroxide were dissolved in 2304 grams of water. Tetrapropylammonium bromide. 362.4 grams, was added and dissolved. To the composite solution was added 439.8 grams of Ludox LS silica sol (30% $SiO_2$) with vigorous stirring. The reaction mixture was heated at 165°C for 216 hours. The crystalline product obtained had the X-ray diffraction pattern of ZSM-5 and the crystallinity was 120%, compared with a reference sample. The crystalline product was dried at 165°C. The sorption capacities of the crystalline product were, in grams/100 grams of zeolite at 25°C:

Cyclohexane, 20 mm Hg     2.1
n-Hexane. 20 mm Hg      10.8
Water, 12 mm Hg      10.4
The chemical composition was:

|  | Dried at 165°C | Ignited Weight Bases |
|---|---|---|
| $SiO_2$, Wt % | 84.8 | 96.7 |
| $B_2O_3$, Wt % | 1.23 | 1.40 |
| $Al_2O_3$, ppm | 460 | 525 |
| $Na_2O$, Wt % | 1.05 | 1.20 |
| N, Wt % | 0.90 | - |
| Ash, Wt % | 87.7 | 100 |
| $SiO_2/(Al_2O_3+B_2O_3)$, molar | | 78 |
| B/(Al + B) | 0.975 | |

The crystalline material consisted of near-spherulitic particles with a diameter in the range of 1 to 2 microns.The above material was heated in a water-free environment. i.e., an anhydrous ammonia stream, to 600°C and held at that temperature for 1 hour. The calcined material was then allowed to cool to ambient temperature in an anhydrous ammonia atmosphere.

The above crystalline product was then exchanged three times for 2 hours at room temperatue with a solution. 0.1N $NH_4Cl$ and 1N $NH_4OH$ (5.35 grams $NH_4Cl$ + 60 grams of concentrated $NH_4OH$/liter), using 50 cc per gram of zeolite per exchange. The pH of the exchange solution was 10.4. The solid was filtered, washed chloride-free with 1N $NH_4OH$ and dried at ambient temperature. It contained 0.02% residual sodium.

The ammonium form of the boron-containing crystalline material was then mulled with alumina monohydrate in the weight ratio of 65% zeolite and 35% alumina, both based on ash. Water was added to obtain an extrudable blend. The mixture was then extruded through a 1.6mm (1 16-inch) die, dried at 120°C and calcined for 3 hours at 538°C in air. to provide a catalyst material which proved to have an Alpha Value of 2.4.As is known in the art. the Alpha Value is an approximate indication of the catalytic cracking activity of the catalyst compared to a standard catalyst. and it gives the relative rate constant (rate of normal hexane conversion per volume of catalyst per unit time). It is based on the activity of the highly active silica-alumina cracking catalyst taken as an Alpha of 1 (rate constant = 0.016). The Alpha Test is described in U. S. Patent No. 3,354,078 and in The Journal of Catalysis. Vol. IV. pp. 522-529 (August 1965).

## Example 2

A shale oil having first been hydrotreated in a conventional manner and having the properties listed below:

Gravity, °API   36.1
Pour Point, °F(°C)   70(21)
Hydrogen, Wt %   13.81
Sulfur, Wt %   0.133
Nitrogen, ppm   340

Yields, Wt % IBP-400°F(IBF-204°)   13.6
400-650°F(204-343°C)   50.6
650-850°F(343-454°C)   26.9
850°F$^+$(454°$^+$C)   8.9

was contacted in a dewaxing reactor, with the present catalyst prepared in Exmaple 1, at a LHSV of 0.5, a pressure of 13890 kPa (2000 psig) and a hydrogen circulation rate of 890 Nm³·m³ (5000 SCF bbl). As the reactor temperature progressed through the range of 371 to 441°C (700° to 825°F), product pour points and yields were measured. The results were as follows:

| | Reactor Temperature, °F(°C) | | |
| | 725(385) | 775(413) | 825(441) |
| --- | --- | --- | --- |
| Pour Point, °F | +75(+24) | +40(+4) | -50(-45) |
| Yields, Wt % | | | |
| $C_1$-$C_3$ | 0.09 | 1.1 | 4.2 |
| $C_4$ | 0.12 | 1.3 | 3.6 |
| $C_5$ | 0.27 | 1.5 | 3.5 |
| $C_6$-400°F($C_6$-204°C) | 12.5 | 17.0 | 29.5 |
| 400-650°F(204-343°C) | 52.5 | 53.8 | 51.8 |
| 650-850°F(343-454°C) | 26.0 | 25.0 | 15.0 |
| 850°F+(454°C+) | 8.4 | 4.5 | 1.5 |
| Hydrogen Consumption, SCF/bbl ($Nm^3/m^3$) | -2(-0.4) | -9(-1.6) | 114(20) |

## Example 3

A shale oil having first been treated to remove heavy metals and having the properties listed below:

Gravity, °API   21.9
Pour Point, °F   75(24)
Hydrogen, Wt %   11.51
Sulfur, Wt %   0.59
Nitrogen, Wt %   2.02

Yields, Wt % IBP-400°F(IBF-204°C)   4
400-650°F(204-343°C)   34
650°F+(343°C$^+$   62

was contacted in a dewaxing reactor with catalyst prepared in Example 1 at a pressure of 13890 kPa (2000 psig) hydrogen partial pressure and a hydrogen circulation rate of 890 Nm³ m³ (5000 SCF bbl). Reaction particulars including product pour points and yields were measured and are shown below:

| Conditions | | | | |
|---|---|---|---|---|
| Reactor Temp., °F(°C) | 800(427) | | 825(441) | |
| LHSV | 0.8 | 0.6 | 1.1 | 0.5 |
| **Yields, Wt %** | | | | |
| $C_1-C_3$ | 2.8 | 2.8 | 3.3 | 3.7 |
| $C_4$ | 0.7 | 0.8 | 0.8 | 1.3 |
| $C_5$ | 0.3 | 1.0 | 0.4 | 1.7 |
| $C_6$–400°F($C_6$–204°C) | 15 | 17 | 26 | |
| 400–650°F(204–343°C) | 43 | 43 | 48 | 93 |
| 650°F+(343°C+) | 38 | 35 | 22 | |
| $H_2$ Consumption SCF/bbl | | | | |
| ($Nm^3/m^3$) | 340(61) | 390(69) | 450(80) | 635(13) |
| Pour Point, °F(°C) | 45 | 30 | 15 | –10 |
| **Data Corrected to 0.5 LHSV** | | | | |
| Pour Point, °F | – | 20(–7) | – | –10(–23) |
| $H_2$ Consumption SCF/bbl ($Nm^3/m^3$) | – | 490(87) | – | 635(113) |

## Example 4

A quantity of the same shale oil used in Example 3 was subjected to distillation and the high-pour 650°F[+] fraction having the following properties:

Gravity, °API      17.0
Pour Point, °F(°C)      100(38)
Hydrogen, Wt %      11.3
Sulfur, Wt %      0.51
Nitrogen, Wt %      2.4

was contacted with catalyst prepared in Example 1 in a dewaxing reactor at a pressure of 13890 kPa (2000 psig) and 890 Nm³·m³ (5000 SCF·bbl) hydrogen circulation. Reaction particulars, including product yields and pour points, were measured and are shown below:

Conditions

| | | | |
|---|---|---|---|
| Reactor Temp., °F(°C) | 800(427) | 825(441) | |
| LHSV | 0.5 | 1.0 | 0.41 |

Yields, Wt %

| | | | |
|---|---|---|---|
| $C_1$-$C_3$ | 3.1 | 7.9 | 8.0 |
| $C_4$ | 0.6 | 2.9 | 2.6 |
| $C_5$ | 0.3 | 1.5 | 1.4 |
| $C_6$-400°F($C_6$-204°C) | 13 | 17 | 20 |
| 400-650°F(204-343°C) | 34 | 31 | 36 |
| 650°F+(343+°C) | 49 | 39 | 32 |
| $H_2$ Consumption, SCF/bbl ($Nm^3/m^3$) | 250(45) | 590(105) | 925(165) |

Pour Point, °F(°C)   60(16)   15 (-9)   -35(-37)

Data Corrected to 0.5 LHSV

| | | | |
|---|---|---|---|
| Pour Point, °F(°C) | 60(16) | - | -25(-32) |
| $H_2$ Consumption, SCF/bbl ($Nm^3/m^3$) | 250(45) | - | 760(135) |

Example 5

For comparison purposes, a quantity of the same shale oil as used in Example 3 was contacted with low acidity aluminosilicate NaZSM-5 in a dewaxing reactor at 13890 kPa (2000 psig) and 890 Nm³·m³ (5000 SCF·bbl) hydrogen circulation. The product yields and pour points obtained were measured. The following Table compares the results from this example to those obtained in Example 3:

| Conditions | Example 3 | Example 5 |
|---|---|---|
| Reactor Temp., °F(°C) | 800(427) | 803(428) |
| LHSV, Vo/Vc-Hr | 0.6 | 0.4 |

Yields, Wt %

| | Example 3 | Example 5 |
|---|---|---|
| $C_1$-$C_3$ | 2.8 | 7.6 |
| $C_4$ | 0.8 | 1.6 |
| $C_5$ | 1.0 | 1.4 |
| $C_6$+ | 95.4 | 89.4 |
| $H_2$ Consumption, SCF/bbl ($Nm^3/m^3$) | 390(69) | 750(134) |

Pour Point, °F(°C)   30(-1)   5(-15)

Data Corrected to 0.5 LHSV

| | Example 3 | Example 5 |
|---|---|---|
| Pour Point, °F(°C) | 20(-6) | 23(-5) |
| $H_2$ Consumption, SCF/bbl ($Nm^3/m^3$) | 490(87) | 570(101) |

The data, corrected for the space velocity difference, shows that the catalyst of the present invention consumes less hydrogen while performing as well as the zeolite used in Example 5 for pour point reduction.

Example 6

Also for comparison purposes, the feedstock as used in Example 3, having been hydrotreated in a conventional manner, was subjected to distillation and the $(343°C^+)650°F^+$ fraction having the following properties:

Gravity, °API    28.4
Pour Point, °F(°C)    105(41)
Hydrogen, Wt %    13.24
Sulfur, Wt %    0.25
Nitrogen, Wt %    0.02

was contacted with a conventional HZSM-5 dewaxing catalyst at a pressure of 13890 kPa (2000 psig) and a hydrogen circulation rate of 890 Nm³/m³ (5000 SCF/bbl). Reaction particulars, including product yields and pour point, were measured. The results are shown below:

### Conditions

| | | | |
|---|---|---|---|
| Temperature, °F(°C) | 775(413) | 800(427) | 825(441) |
| LHSV | 0.46 | 0.50 | 0.43 |

### Yields, Wt %

| | | | |
|---|---|---|---|
| $C_1-C_3$ | 0.82 | 1.82 | 5.3 |
| $C_4$ | 0.63 | 1.59 | 5.6 |
| $C_5$ | 0.35 | 1.70 | 5.6 |
| $C_6^+$ | 98.2 | 95.1 | 83.9 |
| $H_2$ Consumption, SCF/bbl ($Nm^3/m^3$) | 15(3) | 138(25) | 270(48) |
| Pour Point, °F(°C) | 95(35) | 80(27) | 20(-7) |

Comparison of the pour point data from Example 6 with the data in Example 4 shows that under identical reaction conditions the catalyst of the present invention was more effective for pour point reduction. This is in spite of the 10-fold higher nitrogen concentration in the feed in Example 4. This indicates that the boron-containing crystalline material, having the structure of zeolite ZSM-5, has increased resistance to nitrogen poisoning.

EXAMPLES 7-16

Table 1 summarizes results of calcination and ion-exchange experiments on borosilicate ZSM-5 and illustrates the importance of the procedural steps of the invention. The samples treated by a procedure other than that of this invention lose a considerable percentage of boron present. The reduced boron loss in Example 9 is explained by the protective action of a relatively high sodium content. The column of Table 1 labeled "$B_2O_3$ Wt %" is based upon ignited weight.

8

## Table 1

### Calcination and Ion-Exchange of Borosilicate ZSM-5

| Example | $SiO_2/B_2O_3$ In | Calcination | | Ammonia Sorbed | Exchange with | | | · | $B_2O_3$ Wt % | Boron Loss % |
| --- | --- | --- | --- | --- | --- | --- | --- | --- | --- | --- |
| | | Calcined | Followed By | | $NH_4Cl$ | $NH_4Cl/NH_4CH$ | $NH_4ac$ | | | |
| 7 | 43 | Air | -- | No | X | - | - | 2.62 | 1.48 | 44 |
| 8 | 48 | Air | -- | No | X | - | - | 2.34 | 1.29 | 45 |
| 9 | 79 | Air | -- | No | X | - | - | 1.42 | 1.15 | 19 |
| 10 | 48 | $N_2$ | Air | No | - | - | X | 2.51 | 1.86 | 14.5 |
| 11 | 32.8 | $N_2$ | Air | No | - | - | X | 3.37 | 1.84 | 45 |
| 12 | 44.8 | $N_2$ | Air | No | - | - | X | 1.89 | 1.20 | 36.5 |
| 13 | 63.1 | $N_2$ | Air | No | - | - | X | 1.76 | 1.37 | 22 |
| 14 | 80.3 | $NH_3$ | -- | Yes | - | X | - | 1.40 | 1.37 | 2.1 |
| 15 | 31.4 | $NH_3$ | -- | Yes | - | - | X | 3.38 | 3.28 | 3.0 |
| 16 | 80.3 | $N_2$ | -- | Yes | - | X | - | 1.40 | 1.33 | 5.0 |

Examples 7-9 are calcined in air, causing a temperature excursion and formation of water when the organic cation is oxidized. After cooling, the calcined sample is immediately contacted with unbuffered ammonium chloride solution (pH 5-5.5), without prior sorption of ammonia. This treatment resulted in massive hydrolysis of boron. The competing ion-exchange with ammonium prevents even greater loss of boron.Examples 10-13 are calcined in anhydrous nitrogen. Any water present in the zeolite is removed during the heat-up period before the decomposition of the organic cations begins to occur. When the decomposition is complete, small amounts of carbon deposit on the zeolite and are burnt off by replacing the nitrogen with dry air. This step is not necessary for the ion-exchange to succeed, and is carried out merely for aesthetic reasons to give the zeolite a pure white color. The acid sites formed are not neutralized with ammonia gas prior to contact with the aqueous ion-exchange solution, which had a pH in the range of 6.5 to 7.0. Massive hydrolysis of boron is again observed.

Examples 14 and 15 are calcined in an ammonia stream. A mixed nitrogen-ammonia stream would have been satisfactory as well. The samples are cooled to room temperatures in flowing ammonia. resulting in neutralization of the hydrogen sites and additional physical sorption of ammonia on the zeolite. Example 14 is then contacted with an ion-exchange solution containing 0.1N $NH_4Cl$ and 1N $NH_4OH$ (pH 10.4). This procedure causes very little loss of boron. Example 14 is repeated as Example 16. except that ammonia calcination is replaced by nitrogen calcination.

The same type of calcination. followed by neutralization with ammonia and ammonia sorption. gave a similar result when exchanged with ammonium acetate (Example 15). The adsorbed ammonia. of course. raised the pH of the ion-exchange solution.

Example 17

The same procedure used for Examples 14 and 15 is used for calcining a ZSM-12 sample. except that the deposited carbon is burnt off in air. as in Examples 10-13. After cooling to room temperature. ammonia is sorbed prior to contact with an exchange solution having a concentration of 0.2 N NaCl and 0.02 N NaOH. The sample is then washed with 0.01 N NaOH (0.4g NaOH liter). The results are as follows:

|  | $B_2O_3$, Wt % (ignited wt. basis) |
|---|---|
| As crystallized | 1.96 |
| After calcination and ion-exchange | 1.83 |

The loss of boron is only 6.6%. demonstrating that nitrogen calcination is acceptable if followed by ammonia sorption and ion-exchange at high pH.

Claims

1. A method for preparing a catalyst composition comprising a boron-containing crystalline material having the structure of zeolite ZSM-5. ZSM-11. ZSM-12, Beta or Nu-1, which comprises the sequential steps of synthesizing a boron-containing crystalline material having the structure of zeolite ZSM-5. ZSM-11. ZSM-12, Beta or Nu-1; drying said crystalline material at a temperature of from ambient to less than 170°C: calcining said dried crystalline material in an oxygen-and water-free environment of anhydrous ammonia. anhdyrous nitrogen, other anhydrous inert gas or a mixture thereof at a temperature of 200° to 600°C: adsorbing ammonia on said calcined crystalline material: contacting said crystalline material with an ion-exchange solution at a pH from above 7 to 11: drying said ion-exchanged material at a temperature of ambient to less than 170°C and calcining said dried ion-exchanged material at a temperature of 200° to 600°C.

2. The method of Claim 1, wherein the step of synthesizing boron-containing crystalline material comprises forming a reaction mixture having a composition. in terms of mole ratios. falling within the following ranges:

$OH^-$ $SiO_2$       0.07 - 1.0
$R_4N^+$ ($R_4N^+ + Na^+$)     0.2 - 0.95
$H_2O$ $OH^-$      10 - 300
$SiO_2$ $Al_2O_3$     500 - 00
$SiO_2$ $B_2O_3$     4 - 300

wherein R is selected from hydrogen and at least one organic aliphatic moiety having 2 to 10 carbon atoms. and heating said reaction mixture to a temperature of 90° to 200°C for 6 hours to 120 days.

3. The method of Claim 1 or Claim 2, wherein said boron-containing crystalline material has a composition as crystallized in terms of mole ratios of oxides on a anhydrous basis as follows:

$(R_2O. M_{2/n}O)_w : (Al_2O_3)_x : (B_2O_3)_z : (SiO_2)_y$

wherein $W/(X+Z)$ is from greater than 0.5 to less than 3: $Y/(X+Z)$ is greater than 20; $Z/(X+Z)$ is from 0.6 to 1.0; R is a nitrogen-containing cation provided by a primary amine containing from 2 to 10 carbon atoms or a tetraalkylammonium compound in which the alkyl groups contain from 2 to 5 carbon atoms; M is a metal from Group IA of the Periodic Table of the Elements, ammonium. hydrogen. or mixtures thereof. and n is the valence of M.

4. The method of any preceding claim. wherein said pH in said ion-exchange solution contacting step is from 9 to 11.

5. The method of any preceding claim. wherein said crystalline material is composited with an inorganic oxide material.

6. The method of claim 5 wherein compositing with said organic oxide material is effected after contacting the crystalline material with said ion-exchange solution but prior to drying the ion-exchanged material.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 644 200 (D.A. YOUNG) --- | | B 01 J 29/04 |
| A | US-A-3 853 743 (A.B. SCHWARTZ) --- | | |
| A | US-A-4 285 919 (M.R. KLOTZ) ----- | | |

TECHNICAL FIELDS SEARCHED (Int. Cl.4)

B 01 J 29/00

The present search report has been drawn up for all claims

| Place of search | Date of completion of the search | Examiner |
|---|---|---|
| THE HAGUE | 07-12-1987 | DEVISME F.R. |